(19) Europäisches Patentamt
European Patent Office
Office européen des brevets

(11) **EP 4 668 043 A1**

(12) **EUROPEAN PATENT APPLICATION**
published in accordance with Art. 153(4) EPC

(43) Date of publication:
**24.12.2025 Bulletin 2025/52**

(21) Application number: **23930456.1**

(22) Date of filing: **29.03.2023**

(51) International Patent Classification (IPC):
**G05D 1/00** (2024.01)   **G08G 1/005** (2006.01)

(52) Cooperative Patent Classification (CPC):
**G05D 1/633; G05D 1/242; G05D 1/686;**
**G08G 1/005;** G05D 2101/20; G05D 2105/315;
G05D 2107/60; G05D 2109/10

(86) International application number:
**PCT/JP2023/012911**

(87) International publication number:
**WO 2024/201818 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **HONDA MOTOR CO., LTD.**
**Tokyo 105-8404 (JP)**

(72) Inventors:
• **MATSUZAKI, Sango**
**Wako-shi, Saitama 351-0193 (JP)**
• **KOMURO, Misa**
**Wako-shi, Saitama 351-0193 (JP)**

(74) Representative: **Kiwit, Benedikt**
**Mitscherlich PartmbB**
**Patent- und Rechtsanwälte**
**Karlstraße 7**
**80333 München (DE)**

(54) **CONTROL DEVICE, CONTROL METHOD, AND PROGRAM**

(57) A control device that controls at least temporarily a mobile object which moves autonomously in an area in which another pedestrian walks while leading a leading target person includes a recognition part configured to recognize objects including the leading target person and the other pedestrian, a prediction part configured to predict a future position of the recognized other pedestrian, a path generating part configured to generate a path along which the mobile object is to move in a future, and a drive controller configured to control a drive device attached to the mobile object so that the mobile object moves along the path. The path generating part sets a plurality of path candidates and selects one path candidate as the path while excluding a path candidate in which the other pedestrian is predicted to enter a predetermined area including the mobile object and the leading target person.

FIG. 2

EP 4 668 043 A1

**Description**

TECHNICAL FIELD

The present invention relates to a control device, a control method, and a program.

BACKGROUND ART

Recently, implementation of a mobile object (which also referred to as a robot or a micromobility) moving autonomously to follow a user has been carried out for the purpose of carrying luggage of the user or the like. An invention of a moving control device associated with micromobility has been disclosed (Patent Document 1). A mobile object moving autonomously to lead a user as well as to follow a user has been studied.

Citation List

Patent Document

Patent Document 1: Japanese Unexamined Patent Application, First Publication No. 2020-529050

Non Patent Document

Non Patent Document 1: "Social Force Model for Pedestrian Dynamics," D. Helbing and P. Molnar, 20 May 1998
Non Patent Document 2: "Human Trajectory Forecasting in Crowds: A Deep Learning Perspective," Parth Kothari, Sven Kreiss, and Alexandre Alahi, 11 January 2021

SUMMARY OF INVENTION

Technical Problem

In the related art, a path may not be able to be appropriately generated depending on a situation in which a mobile object is placed. For example, how the mobile object should behave in leading a leading target person has not been considered.
The present invention was made in consideration of the aforementioned circumstances, and an objective thereof is to provide a control device, a control method, and a program that can generate a path of a mobile object to adopt an appropriate behavior for a leading target person.

Solution to Problem

A control device, a control method, and a program according to the present invention employ the following configurations.

(1) A control device according to an aspect of the present invention is a control device for controlling at least temporarily a mobile object which moves autonomously in an area in which another pedestrian walks while leading a leading target person, the control device including a recognition part configured to recognize objects including the leading target person and the other pedestrian, a prediction part configured to predict a future position of the recognized other pedestrian, a path generating part configured to generate a path along which the mobile object is to move in a future, and a drive controller configured to control a drive device attached to the mobile object so that the mobile object moves along the path, wherein the path generating part sets a plurality of path candidates and selects one path candidate as the path while excluding a path candidate in which the other pedestrian is predicted to enter a predetermined area including the mobile object and the leading target person.
(2) In the aspect of (1), the predetermined area is an area that is enlarged as a distance between the mobile object and the leading target person increases.
(3) In the aspect of (1), the predetermined area is an area which is obtained by parallelly moving an ellipse, which has the mobile object and the leading target person as focal points, in a direction from the mobile object toward the leading target person.
(4) In the aspect of (1), the path generating part changes a degree of protrusion in a predetermined direction of the predetermined area on the basis of a speed of the leading target person.

(5) In the aspect of (1), the path generating part changes a degree of protrusion in a predetermined direction of the predetermined area on the basis of attributes of the leading target person.

(6) In the aspect of (1), the path generating part changes a degree of protrusion in a predetermined direction of the predetermined area on the basis of a density of traffic participants in a vicinity of the leading target person.

(7) In the aspect of (1), the path includes a speed element.

(8) In the aspect of (1), the path generating part selects one path candidate out of one or more path candidates, except for a path candidate in which the other pedestrian is predicted to enter the predetermined area, on the basis of a score based on a positional relationship between the mobile object and a given target point.

(9) A control method according to another aspect of the present invention is a control method that is performed by a processor of a control device for controlling at least temporarily a mobile object which moves autonomously in an area in which another pedestrian walks while leading a leading target person, the control method including recognizing objects including the leading target person and the other pedestrian, predicting a future position of the recognized other pedestrian, generating a path along which the mobile object is to move in a future, and controlling a drive device attached to the mobile object so that the mobile object moves along the path, wherein the generating of a path includes setting a plurality of path candidates and selects one path candidate as the path while excluding a path candidate in which the other pedestrian is predicted to enter a predetermined area including the mobile object and the leading target person.

(10) A program according to another aspect of the present invention is a program causing a processor of a control device for controlling at least temporarily a mobile object which moves autonomously in an area in which another pedestrian walks while leading a leading target person to perform, recognizing objects including the leading target person and the other pedestrian, predicting a future position of the recognized other pedestrian, generating a path along which the mobile object is to move in a future, and controlling a drive device attached to the mobile object so that the mobile object moves along the path, wherein the generating of a path includes setting a plurality of path candidates and selects one path candidate as the path while excluding a path candidate in which the other pedestrian is predicted to enter a predetermined area including the mobile object and the leading target person.

Advantageous Effects of Invention

According to the aspects of (1) to (10), it is possible to generate a path of a mobile object to adopt an appropriate behavior for a leading target person.

BRIEF DESCRIPTION OF DRAWINGS

[FIG. 1] A diagram illustrating a configuration of a mobile object.
[FIG. 2] A diagram illustrating a configuration of a control device.
[FIG. 3] A diagram illustrating an example of a path candidate.
[FIG. 4] A flowchart illustrating an example of process details of a prediction part in association with a pedestrian.
[FIG. 5] A diagram illustrating an example of a method of generating an ideal path.
[FIG. 6] A flowchart illustrating an example of process details of the prediction part in association with a user.
[FIG. 7] A diagram illustrating a predetermined area.
[FIG. 8] A diagram illustrating a possible situation according to a comparative example.
[FIG. 9] A diagram illustrating a possible situation according to an embodiment.

DESCRIPTION OF EMBODIMENTS

[Summary]

Hereinafter, a control device, a control method, and a program according to an embodiment of the present invention will be described with reference to the accompanying drawings. A control device according to the present invention controls a drive device of a mobile object such that the mobile object moves. A mobile object in the present invention moves autonomously in an area in which a pedestrian walks while leading a leading target person. An area in which a pedestrian walks may be a walkway, a public open space, a floor in a building, or the like and include a roadway. In the following description, it is assumed that no person boards the mobile object, but a person may board the mobile object. A leading target person is, for example, one pedestrian, but may be a robot or an animal (hereinafter referred to as a user U). The mobile object operates such that another pedestrian interfering with movement of a user U does not become too close to the user U (that is, operates such that a path is made for the user U), for example, by moving just in front of the user U who is an aged person while moving to a given target point. The user U is not limited to an aged person and may be a vulnerable person with respect to traffic including a person having difficulty walking, a child, a person shopping in a market, a patient moving in a hospital, a pet which is being taken for a walk, or the like. This operation may not be performed continually and may be temporarily performed. For example, when the mobile object moves in parallel with a user or tracks the user and detects a predetermined situation (for example, presence of an obstacle or a traffic jam) in the moving direction of the user, the mobile object may temporarily lead the user by performing an algorithm according to the present invention.

[Basic configuration]

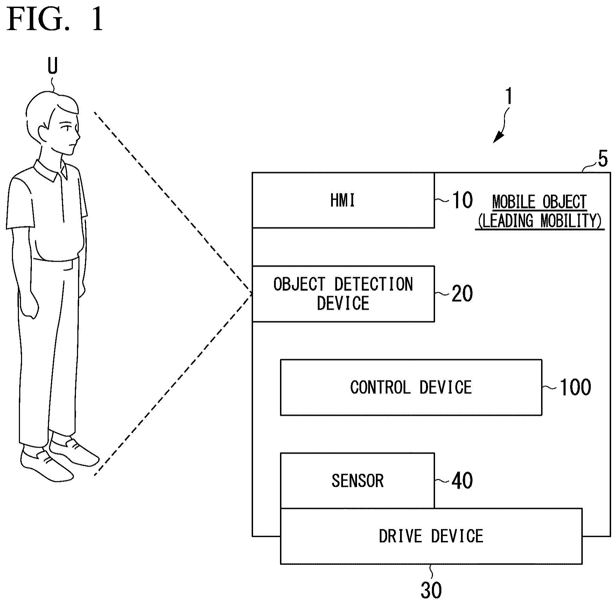

FIG. 1 is a diagram illustrating a configuration of a mobile object 1. For example, a human-machine interface (HMI) 10, an object detection device 20, a drive device 30, a sensor 40, and a control device 100 are mounted in the mobile object 1. These constituents are supported by or accommodated in a base 5.

The HMI 10 presents various types of information to a user U and receives an input operation from the user U. The HMI 10 includes various types of display devices, speakers, buzzers, touch panels, switches, keys, and short-range wireless communication devices. For example, the HMI 10 receives setting of a target point.

The object detection device 20 is a device that generates data for recognizing another pedestrian and a user U who are present near the mobile object 1. The object detection device 20 includes, for example, a camera with an imaging range in the vicinity of the mobile object 1. The object detection device 20 may include a radar device, a Light Detection and Ranging (LIDAR) device, sensors such as an ultrasonic sensor, and an object recognition device that identifies an object by performing a sensor fusion process based on outputs of the sensors.

The drive device 30 is a mechanism for moving the mobile object 1 including a base 5 in an arbitrary direction. The drive device 30 includes, for example, a plurality of wheels, a drive motor attached to one or more wheels, and a steering device attached to one or more wheels. There is no constraint on the configuration of the drive device 30, and an arbitrary configuration may be employed. The drive device 30 moves the mobile object 1 in a state in which a front surface of the base 5 faces the moving direction of the mobile object 1 in principle.

The sensor 40 is a sensor that detects a behavior of the mobile object 1. The sensor 40 includes, for example, a wheel speed sensor that detects speeds of the wheels, an acceleration sensor that detects acceleration acting on the mobile object 1, a yaw rate sensor that is attached to the vicinity of the center of gravity in the horizontal direction of the base 5, a steering angle sensor that detects a steering angle of wheels to be turned (turning wheels), and a direction sensor that detects a direction in the horizontal direction of the mobile object 1.

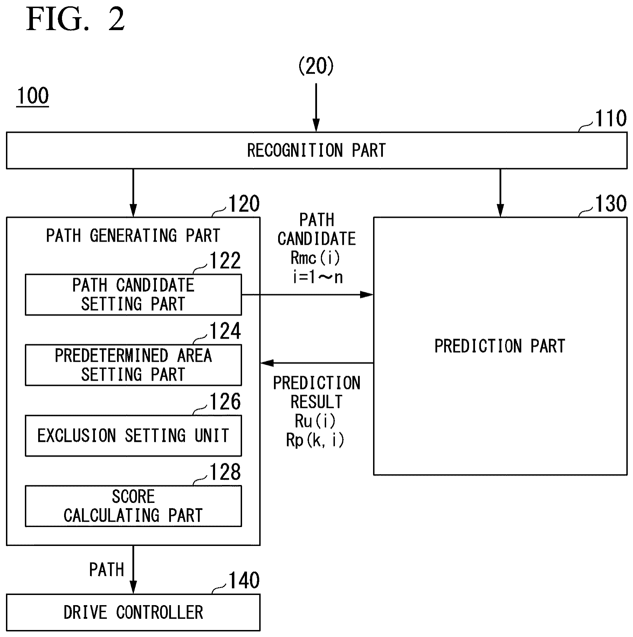

FIG. 2 is a diagram illustrating a configuration of the control device 100. The control device 100 includes, for example, a recognition part 110, a path generating part 120, a prediction part 130, and a drive controller 140. The path generating part 120 includes a path candidate setting part 122, a predetermined area setting part 124, an exclusion processing part 126, and a score calculating part 128. These constituents are realized, for example, by causing a hardware processor such as a central processing unit (CPU) to execute a program (software). Some or all of these constituents may be realized by hardware (a circuit part including circuitry) such as a large scale integration (LSI) device, an application-specific integrated circuit (ASIC), or a field-programmable gate array (FPGA), or a graphics processing unit (GPU) or may be cooperatively realized by software and hardware. The program may be stored in a storage device (a storage device including a non-transitory storage medium) such as a hard disk drive (HDD) or a flash memory in advance or may be stored in a removable storage medium such as a DVD or a CD-ROM and installed in the storage device by setting the removable storage medium (a non-transitory storage medium) into a drive device.

The recognition part 110 recognizes objects including another pedestrian (hereinafter simply referred to as a pedestrian P) and the user U on the basis of data output from the object detection device 20. When the object detection device 20 is a camera, the recognition part 110 recognizes a pedestrian by inputting a camera image to a trained model for identifying a pedestrian. An object other than a pedestrian is recognized in the same way. In order to distinguish the pedestrian P and the user U, the recognition part 110 may store a plurality of images of the user U captured by a camera in advance as templates in a storage unit (not illustrated) and identify the user U by comparing the templates with the camera image. In addition, the recognition part 110 may recognize a position of the user U by causing the HMI 10 to perform short-range wireless communication with a terminal device which is carried by the user U using communication directivity.

[Path candidates]

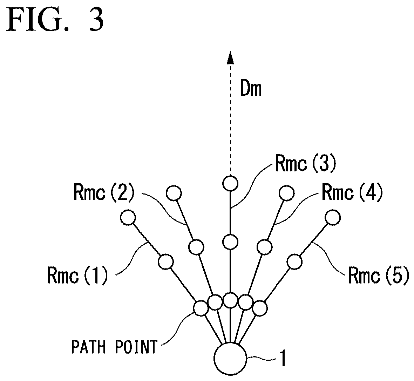

The path candidate setting part 122 of the path generating part 120 generates a plurality of path candidates Pmc(i) which are candidates for a path Rm along which the mobile object 1 is to move in the future. Here, i is an identifier of each path candidate and is assumed to have a value ranging from 1 to n (where n is a natural number equal to or greater than 2). The path and the path candidates are generated, for example, by connecting a plurality of (q) path points arranged at intervals of a predetermined distance. Each path point indicates a point at which the mobile object 1 is to arrive every predetermined time (for each step). FIG. 3 is a diagram illustrating an example of patch candidates Rmc(i). Here, n=5 and q=3 are set. For example, the path candidate setting part 122 generates, for example, the path candidates Rmc(1), Rmc(2), Rmc(4), and Rmc(5) to spread laterally with respect to the path candidate Rmc(3) linearly extending in a front direction Dm of the mobile object 1. For example, it is assumed that the intervals between the path points are constant and each path candidate has a length corresponding to q steps. Each path candidate is not generated to reach a target point given to the mobile object 1, but is generated to have a length corresponding to the constant distance×q steps. For example, the path candidate Rmc(2) is generated to turn to left by a predetermined angle in each step. The path candidate Rmc(1) is generated to turn to left by a larger predetermined angle in each step. The opposite rule thereof is applied to the path candidates Rmc(4) and Rmc(5). This rule is only an example, and the path candidates may be generated on the basis of other rules as long as they represent the same trend (gradual spreading). The path candidate setting part 122 outputs the path candidates Rmc(i) to the prediction part 130.

In the example illustrated in FIG. 3, it is assumed that the intervals between the path points are a constant distance, but the intervals may be variable. A longer interval means faster movement therebetween, and a shorter interval means slower movement therebetween. That is, the path Rm and the path candidates Rmc(i) may include speed elements. For example, the path candidate setting part 122 derivatively generates path candidates with high and low speeds on the basis of the path candidates generated by setting the intervals between the path points to be constant.

[Prediction (simulation)]

When path candidates Rmc(i) are given, the prediction part 130 predicts future positions of the pedestrian P and the user U for each path candidate Rmc(i) on the basis of the premise thereof. The prediction part 130 predicts the future positions of the pedestrian P and the user U, for example, using a method described in one of Non Patent Documents 1 to 3 or a combination method thereof. In the following example, it is assumed that the prediction part 130 predicts the future positions of the pedestrian P and the user U using a method based on a social force model (SFM) described in Non Patent Document 1.

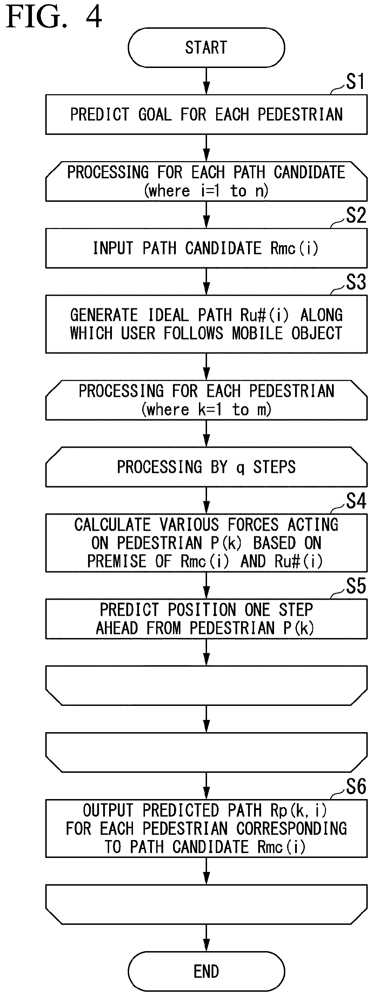

FIG. 4 is a flowchart illustrating an example of process details of the prediction part 130 in association with a pedestrian P. First, the prediction part 130 predicts a goal for each pedestrian P (S1). For example, the prediction part 130 observes a moving trajectory of a pedestrian P in a time series and predicts an end of a moving vector of the pedestrian P in a state in which another pedestrian P, the mobile object 1, and the user U are not present around as a goal (an arrival location) of the pedestrian P.

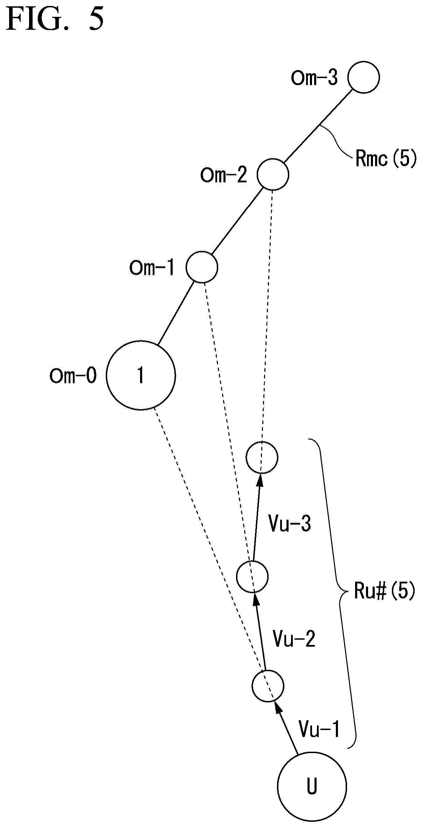

Then, the prediction part 130 performs the processes of S2 to S6 for each path candidate Rmc(i). The prediction part 130 sequentially receives each of the path candidates Rmc(i) of the mobile object 1 (S2) and generates an ideal path Ru#(i) when the user U follows the mobile object 1 in correlation with each of the path candidates Rmc(i) (S3). The ideal path Ru#(i) is a path along which the user U is predicted to move when it is assumed that a pedestrian P is not present near the mobile object 1 and the user U. FIG. 5 is a diagram illustrating an example of a method of generating an ideal path Ru#(i). Here, it is assumed that an ideal path Ru#(5) corresponding to the path candidates Rmc(5) is generated. For example, the prediction part 130 generates the ideal path Ru#(5) of the user U such that the moving vector Vu-1 of the user U directed from a zeroth step (a time point of calculation) to a first step faces the position Om-0 of the mobile object 1 in the zeroth step, such that the moving vector Vu-2 of the user U directed from the first step to a second step faces the position Om-1 of the mobile object 1 in the first step, and such that the moving vector Vu-3 of the user U directed from the second step to a third step faces the position Om-2 of the mobile object 1 in the second step, that is, so as to follow the mobile object 1 with a delay of one step. This generation method is only an example, and another generation method may be employed.

Referring back to FIG. 4, the prediction part 130 performs the processes of S4 and S5 by q steps for each pedestrian P (where k=1 to m). First, various forces acting one a pedestrian P(k) in a current step are calculated on the basis of the assumption that the mobile object 1 and the user U move along the path candidates Rmc(i) of the mobile object 1 and the ideal path Ru#(i) of the user U (S4). These forces do not actually act, but are virtual forces which seem to be generated by psychological movement of the pedestrian P(k).

The virtual forces include, for example, (1) influence F1 which is generated due to an approach of another object (here, the mobile object 1 and the user U), (2) a turning force F2 for correcting the direction toward the goal after changing a trajectory mainly due to the influence F1, and (3) acceleration/deceleration F3 for adjusting the speed to return to a desired speed after accelerating/decelerating mainly due to the influence F1. F1 is a translational force acting in an arbitrary direction in a two-dimensional plane, F2 is a rotational force centered on a pedestrian, and F3 is a translational force which is parallel to a moving vector of the pedestrian. F1 to F3 are simply expressed, for example, as follows. In addition, the virtual forces may be calculated in additionally consideration of an integral factor, a differential factor, or the like.

$$F1 = (\text{weight}) \times (\text{coefficient}) \times (\text{relative speed})/(\text{distance from another object})$$

F2 = (inertial moment)×(coefficient)×(angle difference between latest moving vector and direction to goal)

$$F3 = (\text{weight}) \times (\text{coefficient}) \times (\text{difference between desired speed and latest speed})$$

The prediction part 130 predicts a position and a speed of the pedestrian P(k) one step ahead on the basis of the assumption that the virtual forces continue to act during one step (S5). By performing the relevant processes by q steps for each pedestrian, the prediction part 130 generates and outputs a predicted path Rp(k, i) for each pedestrian P(k) (S6). This predicted path Rp(k, i) is a result of prediction of a future position of the pedestrian P(k) for each path candidate Rmc(i).

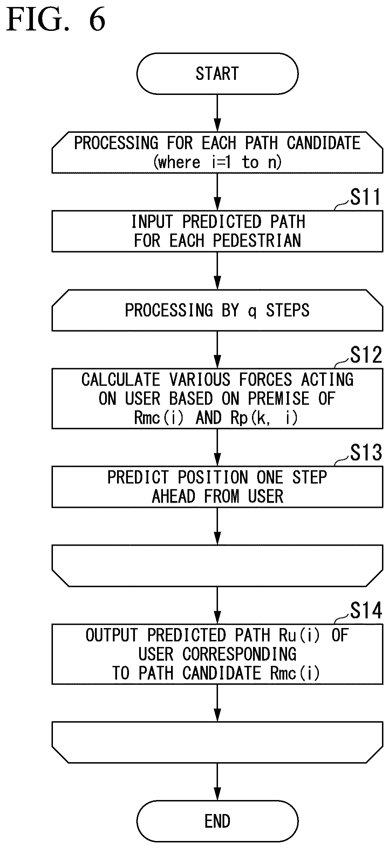

Then, the prediction part 130 predicts the future position of the user U according to a flowchart illustrated in FIG. 6. FIG. 6 is a flowchart illustrating an example of process details of the prediction part 130 in association with a user U.

The prediction part 130 performs the processes of S11 to S14 for each path candidate Rmc(i). The prediction part 130 receives the predicted paths of the pedestrians corresponding to the path candidates Rmc(i) as an input (S11). Then, the prediction part 130 performs the processes of S12 and S13 by q steps. The prediction part 130 assumes that the mobile object 1 and each pedestrian P(k) move along the path candidate Rmc(i) and the predicted path Rp(k, i) of the corresponding pedestrians and calculates various forces acting on the user U in the current step (S12). The method of calculating these various forces may be the same as in the process of S4 in FIG. 4. The prediction part 130 assumes that the virtual forces continue to act during one step and predicts a position and a speed of the user U one step ahead (S13). By performing these processes by q steps, the prediction part 130 generates and outputs a predicted path Ru(i) of the user U for each path candidate Rmc(i) (S14). This predicted path Ru(i) is a result of prediction of the future position of the user U for each path candidate Rmc(i).

[Selection of path candidate]

Referring back to FIG. 2, the path generating part 120 acquires the predicted path Ru(i) and the predicted path Rp(k, i) corresponding to each of i = 1 to n which is the prediction result from the prediction part 130.

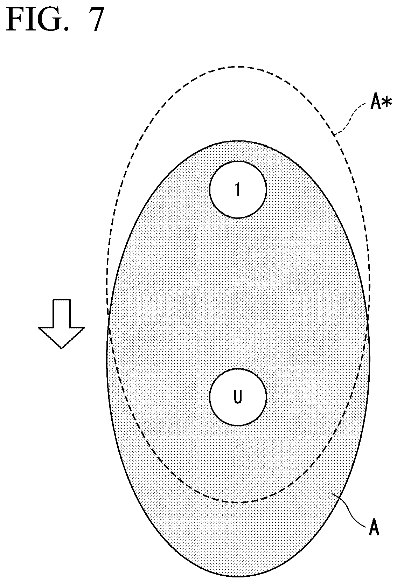

The predetermined area setting part 124 virtually sets a predetermined area including the mobile object and the user U with reference to the path candidates Rmc(i) and the predicted paths Ru(i) in each step of prediction for each of i = 1 to n. The predetermined area is set, for example, to an elliptical shape. The predetermined area is enlarged as a distance between the mobile object 1 and the user U increases. More specifically, the predetermined area setting part 124 sets an area which is formed by moving an area with an ellipse having (representative points of) the mobile object 1 and the user U as focal points as a boundary in parallel in a direction directed from the mobile object 1 to the user U without causing the mobile object 1 to protrude from the ellipse as the predetermined area. FIG. 7 is a diagram illustrating the predetermined area. In the drawing, A* is an ellipse which is initially set, and A is the predetermined area. The predetermined area A is not limited thereto and may be set to swell toward the mobile object 1 or the user U or may be set to a circular shape. The predetermined area setting part 124 may change an eccentricity of the ellipse on the basis of what distance from the user U is to be allowed. For example, when the user U is an aged person (who is a user of predetermined attributes) or a person whose an average walking speed is low, another pedestrian can be made not to approach the user U by increasing the eccentricity. That is, the predetermined area setting part 124 may change the eccentricity on the basis of the speed and/or attributes of the user U. For example, when a mode such as a "slow walking mode" is designated to the HMI 10, the predetermined area setting part 124 sets the eccentricity to be greater than that in an otherwise case. The predetermined area setting part 124 may monitor the speed of the user U in a predetermined period and increase the eccentricity when the average walking speed is equal to or less than a reference speed. In this case, when the eccentricity is set to be excessively larger, the mobile object 1 cannot be moved, and thus it is preferable that an upper limit based on movement constraints of the mobile object 1 be set. The predetermined area setting part 124 may dynamically set the eccentricity or may set the eccentricity, for example, to decrease as a density of traffic participants near the user U such as pedestrians P increases. Accordingly, what distance from the other pedestrian to the user U is to be permitted can be flexibly changed according to a degree of congestion. The ellipse is an example of the predetermined area, and the eccentricity is an example of an index value indicating a degree of protrusion of the predetermined area in a predetermined direction (a direction of a straight line connecting the user U and the mobile object 1). Even when the predetermined area is not elliptical, similarly, the predetermined area setting part 124 may change the degree of protrusion of the predetermined area in the predetermined direction as described above.

The exclusion processing part 126 compares the predetermined area A with the predicted path Rp(k, i) in each step of prediction and determines whether a pedestrian P enters the predetermined area A. The exclusion processing part 126 performs a process of excluding a path candidate Rmc(i) including a step in which a pedestrian P enters the predetermined area A. Accordingly, the likelihood that a pedestrian P will enter the predetermined area A can be made to be close to zero in the range of prediction in the prediction part 130 such that a pedestrian P does not become excessively close to the user U.

The score calculating part 128 selects one path candidate Rmc(i) on the basis of scores SC(i) based on a positional relationship between the mobile object 1 and a given target location out of the path candidates Rmc(i) not excluded by the exclusion processing part 126. The scores SC(i) are calculated to increase as a distance X1 between an end point (a currently farthest point from the mobile object 1) of the path candidate Rmc(i) and a target location given to the mobile object 1 increases and to decrease as the distance X1 decreases. The distance X1 may be used as the score SC(i) without any change, a logarithm, an exponent, a reciprocal, or the like of the distance X1 may be used, or an output value of a certain function with the distance as an input value may be used.

After calculating the score SC(i) for each path candidate Rmc(i), the score calculating part 128 selects a path candidate Rmc(i) in which the total score SC(i) is the best value and outputs the selected path candidate Rmc(i) as a path Rm of the mobile object 1 to the drive controller 140. The drive controller 140 controls the drive device 30 attached to the mobile object 1 such that the mobile object 1 moves along the path Rm.

By performing these processes, the mobile object 1 is controlled so that the mobile object 1 performs simultaneously a leading (guideing) of the user U to a given target location, and a preventing of a pedestrian P not to be interposed between the mobile object 1 and the user U by suppressing a pedestrian P becoming excessively close to the user U with a presence of the mobile object itself.

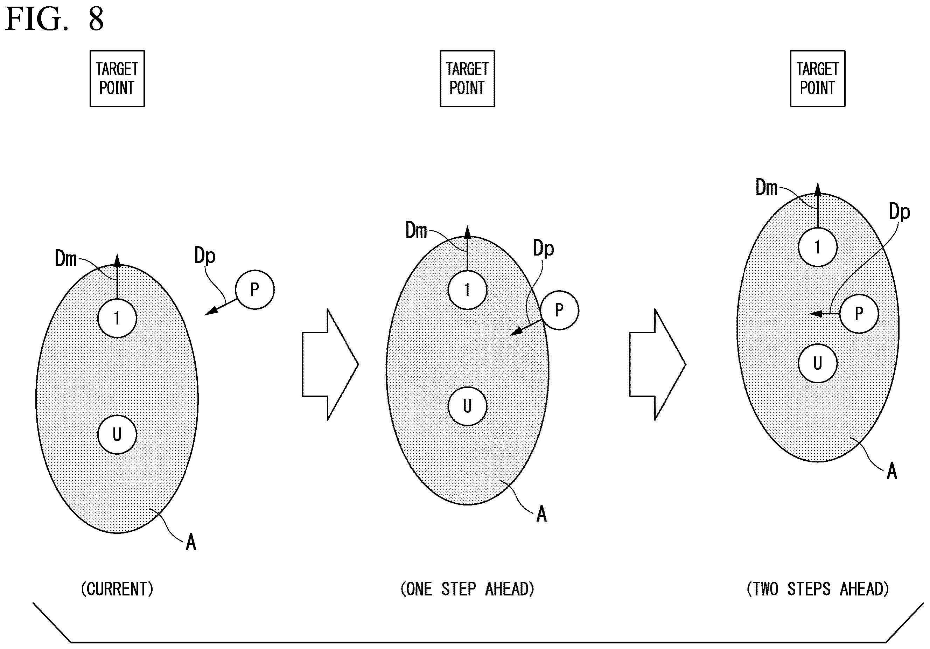

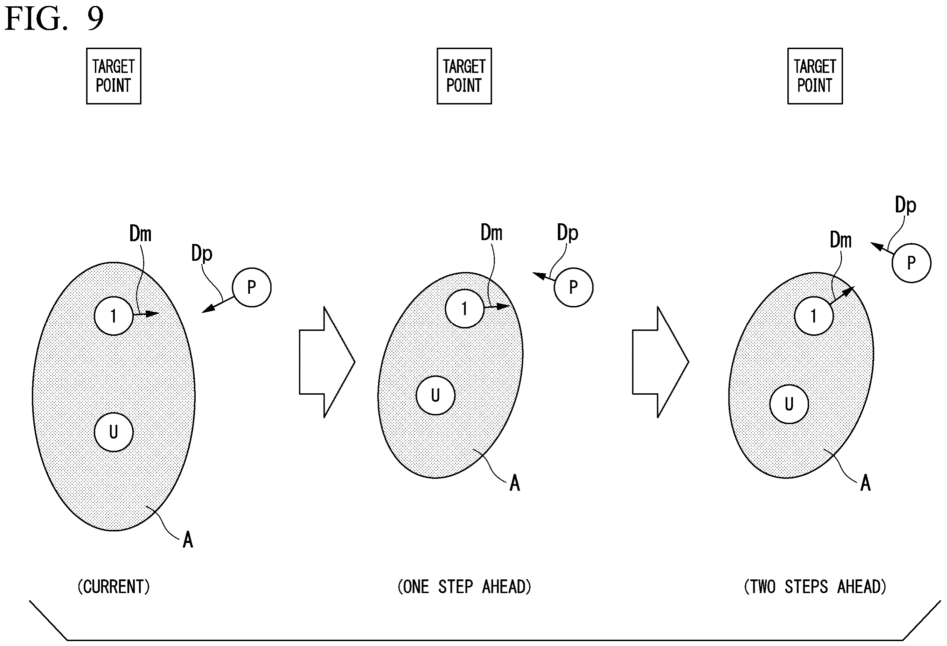

FIGS. 8 and 9 are diagrams illustrating a situation in which the mobile object 1 suppresses a pedestrian P becomig excessively close to the user U. In FIGS. 8 and 9, Dm is a direction directed to a path point which is a destination of a first step ahead in a path candidate Rmc(i), and Dp is a direction directed to a path point which is a destination of a first step ahead in a predicted path Rp(k, i). FIG. 8 illustrates a situation which may occur in a comparative example in which a path candidate Rmc(i) in which a pedestrian P enters the predetermined area A has not been excluded, and FIG. 9 illustrates a situation which may occur in the embodiment in which such a path candidate has been excluded. In the example illustrated in FIG. 8, since the mobile object 1 moves along a path directly straight toward a target location, the influence F1 does not act on the pedestrian P. Since the pedestrian P moves without changing a moving direction thereof, there is a likelihood that the pedestrian will move along a path going between the mobile object 1 and the user U. The user U who is moving to follow the mobile object 1 may feel uncomfortable from these situations for various reasons. On the other hand, in the example illustrated in FIG. 9, the mobile object 1 intentionally decelerates and moves while adopting a path which is biased to right, and the influence F1 acts on a pedestrian P and the pedestrian P is going to change the path to right so as to pass in front of the mobile object 1. At this time, since the distance between the mobile object 1 and the user U decreases with deceleration of the mobile object 1, the size of the predetermined area A decreases and thus the pedestrian passes more easily in the vicinity of the predetermined area A. As a result, it is possible to suppress the pedestrian P entering the predetermined area A and to suppress the pedestrian P becoming excessively close to the user U. Accordingly, it is possible to prevent the pedestrian P from being interposed between the mobile object 1 and the user U. In this way, the control device 100 can generate a path for the mobile object 1 such that an appropriate behavior for the user U is adopted.

According to the aforementioned embodiment, it is possible to generate a path for a mobile object 1 such that the mobile object 1 adopts an appropriate behavior for a leading target person (a user U).

In the above description, the control device 100 is mounted in the mobile object 1, but the present invention is not limited thereto. The control device 100 may be installed at a position separated from the mobile object 1 and acquire output data of the object detection device 20 by communication and transmit a drive instruction signal to the drive device 30, that is, remotely control the mobile object 1.

The aforementioned embodiment can be expressed as follows:

A control device that controls at least temporarily a mobile object which moves autonomously in an area in which another pedestrian walks while leading a leading target person, the control device including:

one or more storage mediums configured to store computer-readable instructions; and
a processor connected to the one or more storage mediums,
wherein the processor executes the computer-readable instructions to perform:

recognizing objects including the leading target person and the other pedestrian;
predicting a future position of the recognized other pedestrian;
generating a path along which the mobile object is to move in a future; and
controlling a drive device attached to the mobile object so that the mobile object moves along the path,

wherein the generating of a path includes setting a plurality of path candidates and selects one path candidate as the path while excluding a path candidate in which the other pedestrian is predicted to enter a predetermined area including the mobile object and the leading target person.

While an embodiment of the present invention has been described above, the present invention is not limited to the embodiment and can be subjected to various modifications and substitutions without departing from the scope of the present invention.

REFERENCE SIGNS LIST

1 Mobile object
20 Object detection device
30 Drive device
100 Control device
110 Recognition part
120 Path generating part
122 Path candidate setting part
124 Predetermined area setting part
126 Exclusion processing part
128 Score calculating part
130 Prediction part
140 Drive controller

**Claims**

1. A control device that controls at least temporarily a mobile object which moves autonomously in an area in which another pedestrian walks while leading a leading target person, the control device comprising:

   a recognition part configured to recognize objects including the leading target person and the other pedestrian;
   a prediction part configured to predict a future position of the recognized other pedestrian;
   a path generating part configured to generate a path along which the mobile object is to move in a future; and
   a drive controller configured to control a drive device attached to the mobile object so that the mobile object moves along the path,
   wherein the path generating part sets a plurality of path candidates and selects one path candidate as the path while excluding a path candidate in which the other pedestrian is predicted to enter a predetermined area including the mobile object and the leading target person.

2. The control device according to claim 1, wherein the predetermined area is an area that is enlarged as a distance between the mobile object and the leading target person increases.

3. The control device according to claim 2, wherein the predetermined area is an area which is obtained by parallelly moving an ellipse, which has the mobile object and the leading target person as focal points, in a direction from the mobile object toward the leading target person.

4. The control device according to claim 1, wherein the path generating part changes a degree of protrusion in a predetermined direction of the predetermined area on the basis of a speed of the leading target person.

5. The control device according to claim 1, wherein the path generating part changes a degree of protrusion in a predetermined direction of the predetermined area on the basis of attributes of the leading target person.

6. The control device according to claim 1, wherein the path generating part changes a degree of protrusion in a predetermined direction of the predetermined area on the basis of a density of traffic participants in a vicinity of the leading target person.

7. The control device according to claim 1, wherein the path includes a speed element.

8. The control device according to claim 1, wherein the path generating part selects one path candidate out of one or more path candidates, except for a path candidate in which the other pedestrian is predicted to enter the predetermined area, on the basis of a score based on a positional relationship between the mobile object and a given target point.

9. A control method that is performed by a processor of a control device for controlling at least temporarily a mobile object which moves autonomously in an area in which another pedestrian walks while leading a leading target person, the control method comprising:

recognizing objects including the leading target person and the other pedestrian;
predicting a future position of the recognized other pedestrian;
generating a path along which the mobile object is to move in a future; and
controlling a drive device attached to the mobile object so that the mobile object moves along the path,
wherein the generating of a path includes setting a plurality of path candidates and selects one path candidate as the path while excluding a path candidate in which the other pedestrian is predicted to enter a predetermined area including the mobile object and the leading target person.

10. A program causing a processor of a control device for controlling at least temporarily a mobile object which moves autonomously in an area in which another pedestrian walks while leading a leading target person to perform:

recognizing objects including the leading target person and the other pedestrian;
predicting a future position of the recognized other pedestrian;
generating a path along which the mobile object is to move in a future; and
controlling a drive device attached to the mobile object so that the mobile object moves along the path,
wherein the generating of a path includes setting a plurality of path candidates, and selects one path candidate as the path while excluding a path candidate in which the other pedestrian is predicted to enter a predetermined area including the mobile object and the leading target person.

FIG. 1

U

1

5

| HMI | ~10 | MOBILE OBJECT (LEADING MOBILITY) |

OBJECT DETECTION DEVICE ~20

CONTROL DEVICE ~100

SENSOR ~40

DRIVE DEVICE

30

# FIG. 2

(20)

<u>100</u>

RECOGNITION PART ～110

PATH GENERATING PART ～120

PATH CANDIDATE SETTING PART ～122

PREDETERMINED AREA SETTING PART ～124

EXCLUSION SETTING UNIT ～126

SCORE CALCULATING PART ～128

PATH CANDIDATE
$Rmc(i)$
$i=1\sim n$

PREDICTION PART ～130

PREDICTION RESULT
$Ru(i)$
$Rp(k, i)$

PATH

DRIVE CONTROLLER ～140

FIG. 3

# FIG. 4

```
                    ( START )
                        │
                        ▼                        ╱S1
        ┌─────────────────────────────────────┐
        │   PREDICT GOAL FOR EACH PEDESTRIAN   │
        └─────────────────────────────────────┘
                        │
                        ▼
       ╱─────────────────────────────────────╲
      │   PROCESSING FOR EACH PATH CANDIDATE   │
      │           (where i=1 to n)             │
       ╲─────────────────────────────────────╱
                        │                        ╱S2
                        ▼
        ┌─────────────────────────────────────┐
        │       INPUT PATH CANDIDATE Rmc(i)    │
        └─────────────────────────────────────┘
                        │                        ╱S3
                        ▼
        ┌─────────────────────────────────────┐
        │   GENERATE IDEAL PATH Ru#(i) ALONG   │
        │  WHICH USER FOLLOWS MOBILE OBJECT    │
        └─────────────────────────────────────┘
                        │
                        ▼
       ╱─────────────────────────────────────╲
      │     PROCESSING FOR EACH PEDESTRIAN     │
      │           (where k=1 to m)             │
       ╲─────────────────────────────────────╱
                        │
                        ▼
       ╱─────────────────────────────────────╲
      │          PROCESSING BY q STEPS         │
       ╲─────────────────────────────────────╱
                        │                        ╱S4
                        ▼
        ┌─────────────────────────────────────┐
        │  CALCULATE VARIOUS FORCES ACTING     │
        │     ON PEDESTRIAN P(k) BASED ON      │
        │   PREMISE OF Rmc(i) AND Ru#(i)       │
        └─────────────────────────────────────┘
                        │                        ╱S5
                        ▼
        ┌─────────────────────────────────────┐
        │      PREDICT POSITION ONE STEP       │
        │      AHEAD FROM PEDESTRIAN P(k)      │
        └─────────────────────────────────────┘
                        │
                        ▼
       ╱─────────────────────────────────────╲
      │                                        │
       ╲─────────────────────────────────────╱
                        │
                        ▼
       ╱─────────────────────────────────────╲
      │                                        │
       ╲─────────────────────────────────────╱
                        │                        ╱S6
                        ▼
        ┌─────────────────────────────────────┐
        │   OUTPUT PREDICTED PATH Rp(k,i)      │
        │ FOR EACH PEDESTRIAN CORRESPONDING    │
        │      TO PATH CANDIDATE Rmc(i)        │
        └─────────────────────────────────────┘
                        │
                        ▼
       ╱─────────────────────────────────────╲
      │                                        │
       ╲─────────────────────────────────────╱
                        │
                        ▼
                    (  END  )
```

# FIG. 5

FIG. 6

```
              ┌─────────────────┐
              │      START      │
              └─────────────────┘
                       │
                       ▼
        ╱─────────────────────────────────╲
       │  PROCESSING FOR EACH PATH CANDIDATE │
        ╲        (where i=1 to n)           ╱
                       │            ┌S11
                       ▼
        ┌─────────────────────────────────┐
        │       INPUT PREDICTED PATH       │
        │       FOR EACH PEDESTRIAN        │
        └─────────────────────────────────┘
                       │
                       ▼
        ╱─────────────────────────────────╲
       │        PROCESSING BY q STEPS       │
        ╲─────────────────────────────────╱
                       │            ┌S12
                       ▼
        ┌─────────────────────────────────┐
        │  CALCULATE VARIOUS FORCES ACTING │
        │   ON USER BASED ON PREMISE OF    │
        │       Rmc(i) AND Rp(k, i)        │
        └─────────────────────────────────┘
                       │            ┌S13
                       ▼
        ┌─────────────────────────────────┐
        │     PREDICT POSITION ONE STEP    │
        │         AHEAD FROM USER          │
        └─────────────────────────────────┘
                       │
                       ▼
        ╱─────────────────────────────────╲
       │                                    │
        ╲─────────────────────────────────╱
                       │            ┌S14
                       ▼
        ┌─────────────────────────────────┐
        │   OUTPUT PREDICTED PATH Ru(i) OF │
        │       USER CORRESPONDING         │
        │     TO PATH CANDIDATE Rmc(i)     │
        └─────────────────────────────────┘
                       │
                       ▼
        ╱─────────────────────────────────╲
       │                                    │
        ╲─────────────────────────────────╱
                       │
                       ▼
              ┌─────────────────┐
              │       END       │
              └─────────────────┘
```

# FIG. 7

FIG. 8

TARGET POINT

TARGET POINT

TARGET POINT

(CURRENT)

(ONE STEP AHEAD)

(TWO STEPS AHEAD)

# FIG. 9

| TARGET POINT | TARGET POINT | TARGET POINT |

(CURRENT)                    (ONE STEP AHEAD)                    (TWO STEPS AHEAD)

EP 4 668 043 A1

## INTERNATIONAL SEARCH REPORT

| International application No. |
| --- |
| **PCT/JP2023/012911** |

| A. | CLASSIFICATION OF SUBJECT MATTER |
| --- | --- |

*G05D 1/02*(2020.01)i; *G08G 1/005*(2006.01)i
FI:    G05D1/02 S; G08G1/005

According to International Patent Classification (IPC) or to both national classification and IPC

| B. | FIELDS SEARCHED |
| --- | --- |

Minimum documentation searched (classification system followed by classification symbols)

G05D1/02; G08G1/005

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2008-234404 A (TOYOTA MOTOR CORP.) 02 October 2008 (2008-10-02) paragraphs [0002]-[0007], [0021]-[0036], fig. 1-4 | 1-10 |
| Y | JP 2022-13038 A (WASEDA UNIV.) 18 January 2022 (2022-01-18) paragraphs [0014], [0028], [0037], fig. 1, 4 | 1-10 |
| Y | JP 2009-157735 A (TOYOTA MOTOR CORP.) 16 July 2009 (2009-07-16) paragraphs [0027], [0030], [0048], fig. 11 | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 May 2023** | **06 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/012911**

| Patent document cited in search report | | | Publication date (day/month/year) | Patent family member(s) | Publication date (day/month/year) |
|---|---|---|---|---|---|
| JP | 2008-234404 | A | 02 October 2008 | (Family: none) | |
| JP | 2022-13038 | A | 18 January 2022 | (Family: none) | |
| JP | 2009-157735 | A | 16 July 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020529050 A

**Non-patent literature cited in the description**

- **D. HELBING** ; **P. MOLNAR**. *Social Force Model for Pedestrian Dynamics*, 20 May 1998

- **PARTH KOTHARI** ; **SVEN KREISS** ; **ALEXANDRE ALAHI**. *Human Trajectory Forecasting in Crowds: A Deep Learning Perspective*, 11 January 2021